# FASCICULE DE BREVET EUROPEEN

(11) **EP 1 928 647 B1**
(45) Date de publication et mention de la délivrance du brevet: **18.08.2010**
(21) Numéro de dépôt: 06793870.4
(22) Date de dépôt: 27.09.2006
(51) Int. Cl.: B29C 73/04, B29C 73/32, B32B 43/00, B32B 3/12, B64F 5/00, H01Q 1/42

(54) **PROCEDE DE REPARATION TRAVERSANTE DE STRUCTURE COMPOSITE A TROIS PEAUX ET DEUX COUCHES D'AME**
VERFAHREN ZUR DURCHGEHENDEN REPARATUR EINER DREI HÄUTE UND ZWEI KERNLAGEN UMFASSENDEN VERBUNDSTRUKTUR
METHOD FOR THROUGH REPAIR OF A COMPOSITE STRUCTURE COMPRISING THREE SKINS AND TWO CORE LAYERS

(30) Priorité: 29.09.2005 FR 0552952
(43) Date de publication de la demande: 11.06.2008
(73) Titulaire: AIRBUS OPERATIONS, 31060 Toulouse (FR)
(72) Inventeur: BERNUS, Christophe, F-31000 Toulouse (FR); MARTY, Jean-Claude, F-31190 Grepiac (FR); FOURNIE, Jacques, F-31330 Grenade sur Garonne (FR)
(74) Mandataire: Ilgart, Jean-Christophe
(86) Numéro de dépôt international: PCT/EP2006/066811
(87) Numéro de publication internationale: WO 2007/036545

(56) Documents cités:
- FR-A- 2 773 645
- US-A- 4 668 317
- US-A- 5 882 756

## Description

L'invention concerne un procédé selon la revendication 1 de réparation traversante d'une structure composite dite sandwich double comprenant deux couches d'une âme interne alvéolaire, entre une paire de peaux externes, et une peau médiane logée entre les deux couches d'âme.

Des structures composites se rencontrent dans une quantité d'appareils, notamment des engins de transport, ferroviaires, maritimes, ou aéronautiques ; par exemple sur les coques des bateaux ou sur les carénages extérieurs, les bords d'attaque de voilure, les ailerons et les radômes des avions. L'utilisation de la peau médiane offre certains avantages de transparence radioélectrique.

La structure est souvent endommagée à un degré qui impose de la remplacer localement. Des portions neuves des peaux et des couches d'âme sont installées à l'endroit de la réparation en prolongeant les portions intactes, et les portions neuves des peaux sont mises à durcir. Pour garantir une surface réparée bien lisse du côté extérieur de la structure, et sans dénivellation entre la peau d'origine et le bord de la portion neuve de cette peau, une contre-forme est posée et pressée sur les portions neuves avant le durcissement, pour amener la portion de réparation à niveau avec la structure d'origine.

Le document US-A-4 668 317 donne un exemple de procédé de réparation selon le préambule de la revendication 1.

On peut craindre un défaut de collage entre les portions neuves des peaux et des couches d'âme malgré la pression de la contre-forme. L'objet de l'invention est d'éliminer ce risque et d'assurer la qualité du collage entre les portions neuves.

Le défaut de collage peut provenir du manque de mise en pression de l'âme sur les peaux lors de la cuisson, accomplissant le durcissement, lui-même causé par la pression de l'air qui est emprisonné dans les alvéoles des couches d'âme et que la pression de la contre-forme empêche de sortir par-dessous les bords de la portion neuve de peau. Dans les procédés usuels, la portion à réparer de la structure est enveloppée dans un sac à vide formant une chambre dans laquelle le vide est réalisé pour pomper les excédents de résine et drainer cet air afin de faciliter le démoulage, mais le drainage n'est pas toujours obtenu de façon satisfaisante.

Dans le cas d'une réparation traversante à une structure en sandwich composite ou sandwich double où on remplace des portions empilées de toutes les peaux et de toutes les couches de l'âme, l'air peut s'échapper de la structure par le côté qui n'est pas comprimé par la contre-forme, mais le drainage n'est en réalité accompli que pour la couche d'âme la plus proche de ce côté, puisque l'autre couche de l'âme, qui est adjacente à la peau comprimée par la contre-forme, est aussi limitée par la peau médiane, qui forme un autre barrage au drainage de l'air. Des précautions doivent donc être prises pour assurer un drainage complet de telles structures composites comprenant deux couches d'âme interne séparées par une peau médiane. Dans les procédés connus, on y parvient en procédant au durcissement des couches de peau en plusieurs étapes de la façon qui sera indiquée plus loin, ce qui est long et peu économique. On propose ici un procédé dont l'intérêt essentiel est d'écourter le temps nécessaire à la réparation, sans pour autant mettre en cause la qualité. Sous sa forme générale, il consiste, dans une telle structure et pour remplacer des portions de toutes les couches par des portions neuves, à poser une contre-forme rigide sur la portion neuve de la première peau externe et autour d'elle, à appuyer la contre-forme sur la structure en matière composite et à durcir les portions neuves des peaux externes et de la peau médiane, **caractérisé en ce qu**'il comprend, avant le durcissement, une étape de perçage de la portion neuve de la peau médiane et le drainage de l'air contenu dans la première couche et la seconde couche de l'âme interne.

Dans un mode de réalisation particulier, le procédé comprend, avant le durcissement et le drainage, une étape de perçage de la portion neuve de la première peau externe.

Le durcissement peut être accompli en deux étapes, voire une seule dans le mode particulier ci-dessus, au lieu de trois selon le procédé antérieur.

Ces aspects de l'invention, ainsi que d'autres, seront maintenant décrits en liaison aux figures suivantes :
- la figure 1 est une vue générale d'un procédé de réparation classique,
- et les figures 2 et 3 illustrent deux variantes principales de réalisation de l'invention.

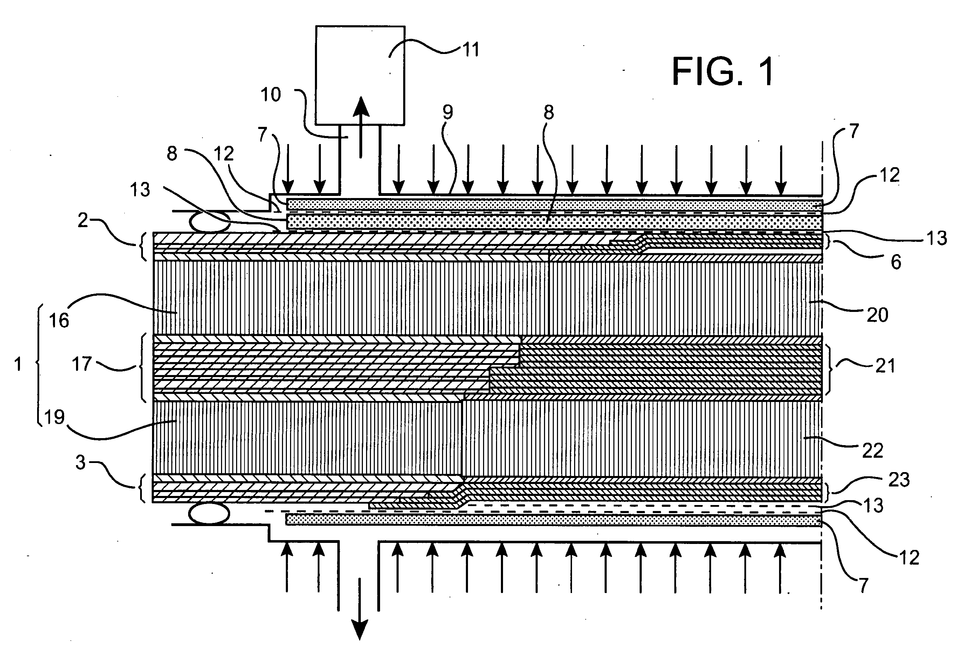

La structure de la figure 1 comprend une structure interne 1 interne et deux peaux extérieures 2 et 3 opposées entre lesquelles la structure interne 1 est intercalée avec collage. Les peaux externes 2 et 3 sont généralement composées de couches plissées de polymère qu'on a successivement drapées puis fait durcir. La structure interne 1 est composée de deux couches d'âme 16 et 19 alvéolaires souvent constituées d'une structure en nid d'abeille dont les cellules s'étendent d'une des peaux externes 2 à l'autre 3. Ces deux couches d'âme sont séparés par une troisième peau qui est une peau médiane 17 de même nature que les peaux externes 2 et 3. La réparation consiste à remplacer une portion de la structure par une portion neuve composée d'une portion neuve de peau 6 prolongeant la peau externe 2 du côté extérieur de la structure, d'une portion neuve de première couche d'âme 20 prolongeant la première couche d'âme 16, d'une portion neuve de peau médiane 21 prolongeant la peau médiane 17, d'une portion neuve de seconde couche d'âme 22 prolongeant la seconde couche d'âme 19 et d'une portion neuve de peau 23 prolongeant la peau externe 3 du côté intérieur de la structure ; les parties neuves 6, 20, 21, 22 et 23 sont empilées les unes sur les autres dans cet ordre.

L'outillage traditionnel comprend une contre-forme 8, usuellement en forme de plaque qu'on pose sur la portion neuve de peau 6. La face inférieure de la contre-forme 8, appuyée sur la portion neuve de peau 6 et, autour d'elle, sur une bordure de la peau externe 2 d'origine, a une forme et une qualité de surface correspondant à celles qu'on veut obtenir pour la peau externe 2 après la réparation. La contre-forme 8 est pressée sur la peau externe 2 et comprime la portion neuve de peau 6. Cela est réalisé en enfermant la portion à réparer de la structure dans un sac à vide 9 dont des évents 10 sur chaque face de la structure sont reliés à une pompe à vide 11 ou un appareillage similaire. Des tapis chauffants 12 sont glissés dans le sac à vide 9 pour cuire les couches de polymère des portions neuves de peau 6 imprégnées de résine. Le chauffage peut aussi être réalisé par d'autres moyens tels que le chauffage par infrarouge. La face inférieure de la contre-forme 8 est souvent revêtue de polytétrafluoroéthylène (PTFE) pour assurer un démoulage facile après le durcissement ; une feuille d'arrachage 13 peut aussi être glissée sous elle, en contact avec la portion neuve de peau 6. Enfin, des tissus d'environnement 7 sont placés entre les faces internes du sac à vide 9 et les tapis chauffants 12. le drainage s'effectue à travers eux.

La pompe à vide 11 aspire l'air inclus dans le sac à vide 9, mais elle est impuissante à le faire convenablement pour l'air inclus dans les alvéoles des âmes internes 16 et 19 sous la portion neuve de peau 6, puisque la pression de la contre-forme 8 l'empêche de s'écouler par-dessous le bord de la portion neuve de peau 6 en produisant une adhérence suffisant à l'étanchéité avec la portion d'origine de la peau externe 2. Des défauts de collage entre les portions neuves de peau et d'âme pourraient apparaître après le durcissement.

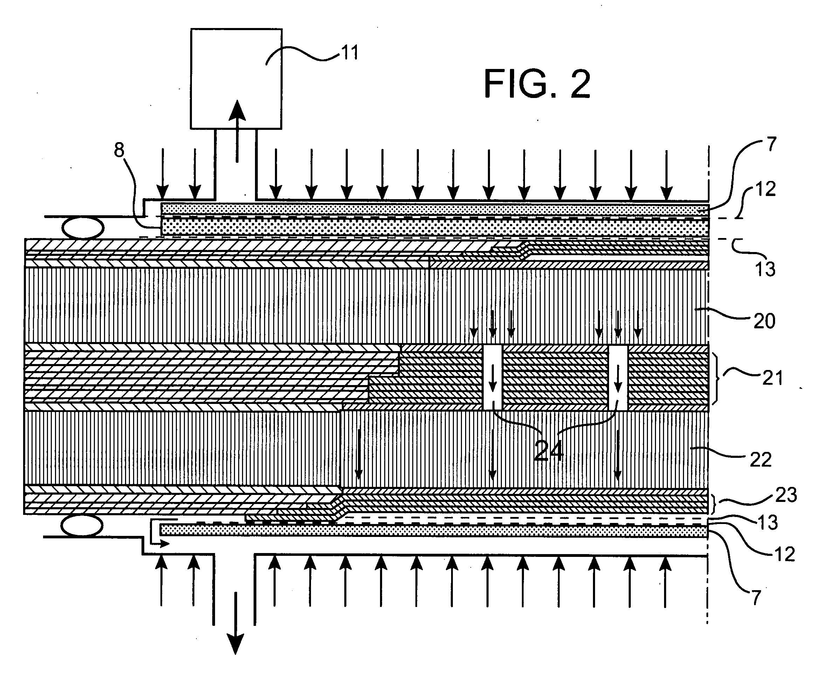

Dans les réalisations connues du procédé de réparation, on drape d'abord la portion neuve de peau 6 puis on installe la portion neuve de la première couche d'âme 20 sur elle et on accomplit le durcissement ; puis on drape la portion neuve de peau médiane 21, on installe la portion neuve de la deuxième couche d'âme 22, et on accomplit le durcissement de la portion neuve de peau médiane 21 ; et enfin on drape la portion neuve de peau externe 23 opposée à la précédente (6) et on la durcit. Ce procédé aux trois étapes distinctes de durcissement peut prendre plusieurs jours, alors que le procédé de l'invention est beaucoup plus bref. Il consiste, avant de réaliser le premier durcissement, à installer aussi la portion neuve de peau médiane 21 et la deuxième couche d'âme 22 et à y percer des trous d'évent 24.. La mise au vide produit alors une évacuation de l'air présent dans la portion neuve de la première couche d'âme 20 par les trous d'évent 24 illustrés à la figure 2. Le durcissement conjoint et simultané des portions neuves de peau externe de peau médiane 6 et 21 peut alors être accompli. La portion neuve de la peau externe 23 opposée est ensuite installée et celle-ci est mise à durcir dans une seconde et dernière étape. La résine imprégnant les plis de la portion neuve de peau médiane 21 ayant coulé dans les évents 24 et les ayant bouchés en durcissant (à moins qu'ils ne soient excessivement larges), un bon ancrage entre le nid d'abeille de la première couche d'âme 16 et la peau médiane 17 est obtenu.

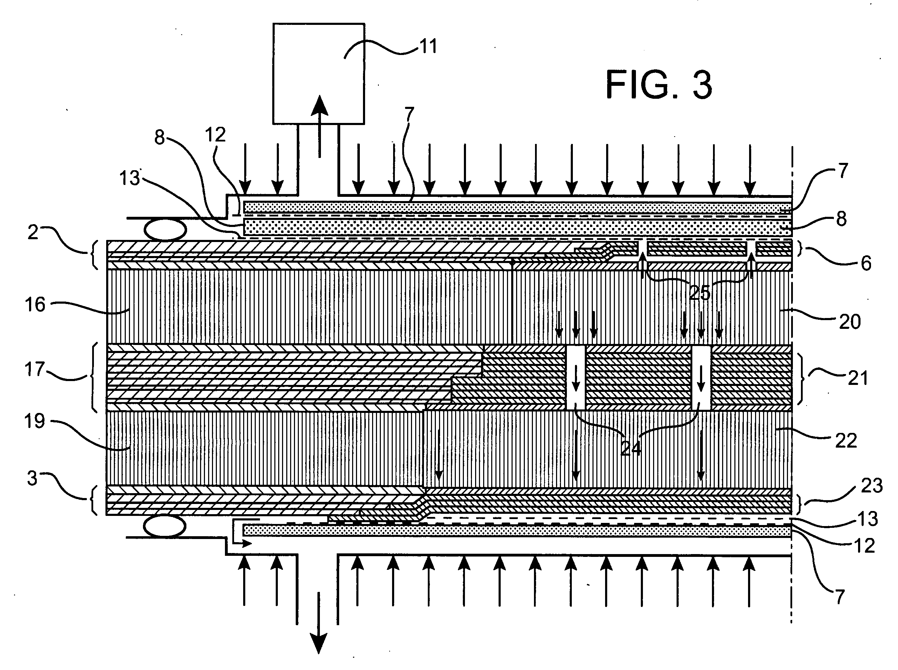

Une variante de l'invention consiste à accomplir le durcissement de toutes les portions neuves 6, 21 et 23 et le drainage de toutes les portions neuves des couches d'âme 20 et 22 en une seule étape, ce qui est possible si les évents 24 sont assez nombreux, et notamment dans le cas de la figure 3. Aux évents 24 déjà rencontrés sont ajoutés des évents 25 percés à travers la portion neuve de peau externe 6 située du côté de la contre-forme 8, permettant à l'air présent dans la portion neuve de la première couche d'âme 20 d'être dégazé des deux côtés avec assez de facilité pour que le durcissement de toutes les portions neuves des peaux 6, 21 et 23 soit accompli à la fois. Les évents 25 sont aussi bouchés à la fois par la résine imprégnant la portion neuve 6 et s'écoulant pendant le chauffage. La qualité de surface de la peau externe 2 n'est pas compromise si les évents 25 occupent une faible superficie. Dans la pratique, on les réalisera au moyen d'un poinçon ou d'une pointe. Leur calibre sera donc plus fin que celui des évents 24.

Le nombre, la grosseur et la disposition des évents seront choisis d'après la largeur de la portion à réparer et les autres paramètres dimensionnels. Des dispositions courantes pour les évents 24 pourront ainsi comprendre un seul évent 24 au centre de la portion réparée, ou un cercle de quelques évents, qui seront alors plus étroits, à une même distance du centre de cette portion réparée.

## Revendications

1. Procédé de réparation traversante d'une structure en matière composite comprenant successivement une première peau externe (2), une première couche d'âme alvéolaire (16), une peau médiane (17), une seconde couche d'âme alvéolaire (19), une seconde peau externe (3), consistant à remplacer des portions desdites peaux externes, de ladite peau médiane et desdites couches d'âme par des portions neuves (6, 20, 21, 22, 23), à poser une contre-forme rigide (8) sur la portion neuve de la première peau externe (6) et autour d'elle, à appuyer la contre-forme sur la structure en matière composite et à durcir les portions neuves des peaux externes et de la peau médiane (6, 21, 23), **caractérisé en ce qu'**il comprend, avant le durcissement, une étape de perçage (24) de la portion neuve de la peau médiane (21) et de drainage de l'air contenu dans la première couche et la seconde couche (20, 22) de l'âme interne.

2. Procédé de réparation traversante d'une structure en matière composite selon la revendication 1, **caractérisé en ce qu'**il comprend, avant le durcissement et le drainage, une étape de perçage (25) de la portion neuve de la première peau externe (6).

3. Procédé de réparation traversante d'une structure en matière composite selon l'une quelconque des revendications 1 ou 2, **caractérisé en ce que** le durcissement est fait en seulement deux étapes, une première des étapes concernant les portions neuves de la première peau externe et de la peau médiane (6, 21), une seconde des étapes concernant la portion neuve de la seconde peau externe (23), les portions neuves de la seconde couche d'âme (22) et de la seconde peau externe (23) étant installées entre les deux étapes.

4. Procédé de réparation transversale d'une structure en matière composite selon la revendication 2, **caractérisé en ce que** le durcissement est accompli en une seule étape.

## Claims

1. A method for through-repair of a composite material structure successively comprising a first external skin (2), a first cellular core layer (16), a middle skin (17), a second cellular core layer (19), a second external skin (3), consisting of replacing portions of said external skins of said middle skin and of said core layers with new portions (6, 20, 21, 22, 23), laying a rigid counter-form (8) on the new portion of the first external skin (6) and around it, pressing the counter-form onto the composite material structure and hardening the new portions of the external skins and the middle skin (6, 21, 23), **characterized in that** it comprises, before hardening, a step (24) for piercing the new portion of the middle skin (21) and for draining the air contained in the first layer and the second layer (20, 22) of the internal core.

2. The method for through-repair of a composite material structure according to claim 1, **characterized in that** it comprises, before hardening and draining, a step (25) for piercing the new portion of the first external skin (6).

3. The method for through-repair of a composite material structure according to any of claims 1 or 2, **characterized in that** the hardening is performed in only two steps, a first of the steps relating to the new portions of the first external skin and of the middle skin (6, 21), a second of the steps relating to the new portion of the second external skin (23), the new portions of the second core layer (22) and of second external skin (23) being set up between both steps.

4. The method for through-repair of a composite material structure according to claim 2, **characterized in that** hardening is accomplished in a single step.

## Patentansprüche

1. Verfahren zur durchgehenden Reparatur einer Verbundwerkstoffstruktur, die aufeinander folgend eine erste Außenhaut (2), eine erste Wabenkernlage (16), eine Mittelhaut (17), eine zweite Wabenkernlage (19), eine zweite Außenhaut (3) umfasst, wobei das Verfahren darin besteht, Bereiche der Außenhäute, der Mittelhaut und der Kernlagen gegen neue Bereiche (6, 20, 21, 22, 23) auszutauschen, eine starre Gegenform (8) auf dem neuen Bereich der ersten Außenhaut (6) und um diesen herum anzubringen, die Gegenform auf die Verbundwerkstoffstruktur zu drücken und die neuen Bereiche der Außenhäute und der Mittelhaut (6, 21, 23) zu härten, **dadurch gekennzeichnet, dass** das Verfahren vor dem Härten eine Stufe des Durchbohrens (24) des neuen Bereichs der Mittelhaut (21) und der Drainage bzw. des Abziehens der Luft, die in der ersten Lage und der zweiten Lage (20, 22) des inneren Kerns enthalten ist, umfasst.

2. Verfahren zur durchgehenden Reparatur einer Verbundwerkstoffstruktur nach Anspruch 1, **dadurch gekennzeichnet, dass** das Verfahren vor dem Härten und der Drainage eine Stufe des Durchbohrens (25) des neuen Bereichs der ersten Außenhaut (6) umfasst.

3. Verfahren zur durchgehenden Reparatur einer Verbundwerkstoffstruktur nach einem der Ansprüche 1 oder 2, **dadurch gekennzeichnet, dass** das Härten in nur zwei Stufen durchgeführt wird, wobei eine erste der Stufen die neuen Bereiche der ersten Außenhaut und der Mittelhaut (6, 21) betrifft, eine zweite der Stufen den neuen Bereich der zweiten Außenhaut (23) betrifft, und die neuen Bereiche der zweiten Kernlage (22) und der zweiten Außenhaut (23) zwischen den zwei Stufen eingebaut werden.

4. Verfahren zur durchgehenden Reparatur einer Verbundwerkstoffstruktur nach Anspruch 2, **dadurch gekennzeichnet, dass** das Härten in einer einzigen Stufe durchgeführt wird.
